(19) Europäisches Patentamt / European Patent Office / Office européen des brevets

(11) **EP 3 574 303 B1**

(12) **EUROPÄISCHE PATENTSCHRIFT**

(45) Veröffentlichungstag und Bekanntmachung des Hinweises auf die Patenterteilung:
**28.09.2022   Patentblatt 2022/39**

(21) Anmeldenummer: **18702955.8**

(22) Anmeldetag: **26.01.2018**

(51) Internationale Patentklassifikation (IPC):
*G01N 15/14* (2006.01)    *G01N 15/00* (2006.01)
*G01N 15/10* (2006.01)    *G06T 7/00* (2017.01)
*G06T 7/20* (2017.01)

(52) Gemeinsame Patentklassifikation (CPC):
**G01N 15/1475; G01N 15/1429; G06T 7/0016;
G06T 7/269;** G01N 15/1431; G01N 15/1436;
G01N 2015/0019; G01N 2015/1081;
G01N 2015/1495; G06T 2207/30024

(86) Internationale Anmeldenummer:
**PCT/EP2018/051986**

(87) Internationale Veröffentlichungsnummer:
**WO 2018/138279 (02.08.2018 Gazette 2018/31)**

(54) **VERFAHREN UND VORRICHTUNG ZUR UNTERSUCHUNG VON ZELLEN**

METHOD AND DEVICE FOR ANALYSING CELLS

PROCÉDÉ ET DISPOSITIF D'ANALYSE DE CELLULES

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **26.01.2017   DE 102017201252**

(43) Veröffentlichungstag der Anmeldung:
**04.12.2019   Patentblatt 2019/49**

(73) Patentinhaber: **Universität Ulm
89081 Ulm (DE)**

(72) Erfinder:
 • **GEIGER, Daniel
  88441 Mittelbiberach (DE)**
 • **NECKERNUSS, Tobias
  73054 Eislingen (DE)**
 • **MARTI, Othmar
  89075 Ulm (DE)**

(74) Vertreter: **Pfenning, Meinig & Partner mbB
Patent- und Rechtsanwälte
Theresienhöhe 11a
80339 München (DE)**

(56) Entgegenhaltungen:
**US-A1- 2013 177 935     US-A1- 2014 113 324
US-A1- 2016 202 172     US-B1- 6 473 698**

• **LIANG XUE ET AL: "Quantitative interferometric microscopy cytometer based on regularized optical flow algorithm", OPTICS COMMUNICATIONS, Bd. 350, 1. September 2015 (2015-09-01), Seiten 222-229, XP055464980, AMSTERDAM, NL ISSN: 0030-4018, DOI: 10.1016/j.optcom.2015.04.017**

**Beschreibung**

Die vorliegende Erfindung betrifft ein Verfahren zur Untersuchung von Zellen nach Anspruch 1 und eine Vorrichtung zur Untersuchung von Zellen nach Anspruch 6.

Zytometrie ist ein häufig in der Medizin und Biotechnologie verwendetes Verfahren zur Detektion von Zellen und deren Eigenschaften. Die Anwendungsmöglichkeiten reichen vom Zählen von Zellen über die Detektion von verschiedenen Zelltypen bis hin zur Untersuchung intrinsischer Zellparameter wie zum Beispiel der mechanischen Eigenschaften oder der Messung des DNA Gehalts einzelner Zellen. Die Ergebnisse aus diesen Methoden sind heutzutage aus der medizinischen Diagnostik nicht mehr wegzudenken und ebenfalls Grundlage für gezielte Therapieansätze (unter anderem: Leukämie, Identifikation von Metastasen).

Die unterschiedlichen Techniken lassen sich grob in zwei Kategorien einteilen. Die sogenannten Bild-Zytometer (image cytometers) untersuchen mit Hilfe eines Video-Mikroskop-Aufbaus eine Probe von Zellen. Dabei werden über Bildverarbeitung verschiedene Parameter der Zellen analysiert. Diese Methode eignet sich besonders für adhärente Zellen, da diese sich während der Messung nicht bewegen. Das Problem der Anordnung von suspendierten Zellen wird bei der Fluss-Zytometrie (flow cytometry) dadurch umgangen, indem die Zellen in einem Mikrofluidik-Kanal an der Messeinheit vorbeigeführt werden. Dies ist die in Forschung und Diagnostik am weitesten verbreitete Methode und gliedert sich nach Art der verwendeten Detektionsmethode in weitere Unterbereiche auf.

Die Standard Methode eines Fluss-Zytometers basiert auf der Detektion und Analyse von gestreutem Laserlicht an Zellen. Dabei wird sowohl das in Vorwärtsrichtung gestreute Licht (zur Größenbestimmung) als auch das seitlich gestreute Licht (morphologische Besonderheiten) detektiert und analysiert. Um eine höhere Spezifizität zu erreichen, können die Zellen bei diesem Verfahren mit fluoreszenten Farbstoffen markiert werden. Dadurch können auch Zellen, die sich optisch nur gering voneinander unterscheiden, aber dennoch eine unterschiedliche Biochemie besitzen, unterschieden werden.

Ein etwas neuerer Ansatz zur Fluss-Zytometrie stammt von Lincoln (B. Lincoln et al., Cytometry Part A 2004, 59A, 203-209) und wurde technisch im Labormaßstab z.B. von Jochen Guck (O. Otto et al., Nature Methods 2015, 12, 199-202; WO 2015/024690 A1; J. Guck et al., Biophysical Journal 2005, Vol. 88, 3689-3698; WO 2012/045716 A1) umgesetzt. Auch die Anwendung im medizinisch diagnostischen Bereich wurde untersucht (H. T. K. Tse et al., Sci. Transl. Med. 2013, 5, 212ra163, DOI: 10.1126/scitranslmed. 3006559). Dabei werden die Zellen nicht aufgrund von optischen und fluoreszenten Eigenschaften identifiziert, sondern aufgrund unterschiedlicher Zellmechanik. Verschiedene Zelltypen weisen zum Teil erhebliche Unterschiede in ihrer Steifigkeit aus. Folglich kann auch die Deformation einer Zelle bei bekannten Kräften ein spezifischer Zellmarker sein. Dafür werden die Zellen mit großer Geschwindigkeit durch einen Mikrofluidik-Kanal geleitet. Aufgrund des Druckgradienten über den Kanal wirken unterschiedliche Kräfte auf die Zellwand. Im Allgemeinen wird die Zellwand entgegen der Flussrichtung nach hinten geschert. Dadurch verändert sich das Erscheinungsbild der Zelle von rund über elliptisch bis zu pistolenkugelförmig ("bullet shape"). Diese unterschiedlichen Formen sind bei gegebener Geschwindigkeit abhängig von Zellgröße und Elastizität. Über eine Hochgeschwindigkeitskamera wird der Kanal beobachtet. Ein Algorithmus detektiert aus den Bildern die Form und somit sowohl Größe als auch Deformation der Zelle.

Der Optische Stretcher ist ebenfalls ein Instrument, mit dessen Hilfe die mechanischen Eigenschaften von suspendierten Zellen gemessen werden können (J. Guck et al., Biophysical Journal 2005, Vol. 88, 3689-3698). Dabei werden Zellen in einem Mikrofluidik-Kanal von zwei Laserstrahlen gefangen. Wird die Intensität des Lasers erhöht, werden die Zellen aufgrund ihres vom Medium unterschiedlichen Brechungsindex in Richtung der Laserstrahlen auseinandergezogen. Dieser Vorgang (ebenso wie der Vorgang der Relaxation nach dem Stretchen) wird von der Kamera aufgezeichnet und die Form bzw. die Verformung der Zelle mit einem Algorithmus bestimmt. Die Charakterisierung erfolgt mithilfe sogenannter Kriech-Diagramme in denen die Deformation über der Zeit aufgetragen ist. Anhand dieser Diagramme können Zellen unterschiedlicher Steifigkeit identifiziert werden.

Ein weiterer möglicher Ansatz für ein Zytometer beinhaltet die immunochemische Markierung der gesuchten Zellen mit magnetischen Nanopartikeln (D. Issadore et al., Sci. Transl. Med. 2012, 4(141), 141ra92). Zur Detektion kommt ein miniaturisierter Hall Sensor zum Einsatz. Mit dieser Methode können selbst sehr wenige Zellen in einer großen Probe detektiert werden.

Für die Sortierung von Zellen existieren ebenfalls unterschiedliche Ansätze. Meist geht der Sortierung ein Detektionsschritt voraus, anhand dessen ein steuerbares Tor ("Gate") aktiviert wird. Am Beispiel von FACS (Flourescenceactivated cell sorting) lässt sich diese Art der Sortierung am einfachsten erklären. Die zu sortierenden Zellen werden mit einem fluoreszenten Farbstoff markiert. Im Mikrofluidik-Kanal werden sie mit einem Laser beleuchtet und entsprechend des detektierten Signals kategorisiert. Im weiteren Verlauf des Kanals ist die Geometrie so gewählt, dass sich die Flüssigkeit in einzelne Tröpfchen mit idealerweise einer Zelle darin aufteilt. Das Tröpfchen wird mit einer elektrischen Ladung versehen und eine Elektrode lenkt es dann je nach Zelltyp in einen von zwei Kanälen. Auf einem ähnlichen Prinzip beruht auch das kürzlich entwickelte RACS Verfahren, welches anstatt der Fluoreszenz das Raman-Signal einer Zelle als Entscheidungskriterium heranzieht.

Ein gänzlich anderer Ansatz liegt den Sortierverfahren zugrunde, die auf den mechanischen Eigenschaften beruhen. Mit einer Kombination von unterschiedlichen Engstellen im Kanal oder einer Aufweitung in einen Bereich mit unterschiedlich dicht stehenden Säulen werden Zellen unterschiedlicher Deformierbarkeit voneinander getrennt. Die Dimensionen der Sortiereinheit müssen dabei jedoch immer an die untersuchte Zellgröße und Elastizität angepasst werden.

Für kommerzielle Analysen kommt quasi ausschließlich die streuchlichtbasierte Flusszytometrie zum Einsatz. Mit dieser Methode lassen sich verschiedene Zelltypen nach Größe und Morphologie unterscheiden, was beispielsweise zur Erstellung eines Blutbildes verwendet wird. Eventuell unzureichende Spezifität wird durch einen zusätzlichen Fluoreszenzanalyseschritt oder die manuelle Analyse eines Ausstrichs umgangen. Diese Geräte sind technisch ausgereift und können von medizinischem Personal bedient werden.

In den letzten Jahren sind die mechanischen Eigenschaften von Zellen immer stärker in den Fokus getreten. Metastasierende Tumorzellen weisen beispielsweise häufig eine erhöhte Elastizität auf. Dadurch können sie durch Gewebe in andere Teile des Körpers migrieren, sich festsetzen und weiter wachsen. Eine Untersuchung von Zellen im Hinblick auf ihre mechanischen Eigenschaften ist deshalb ein wichtiger Punkt bei der Diagnose und Stadienbestimmung einiger Tumorerkrankungen. Die deformationssensitiven Geräte zur Detektion oder Sortierung sind bisher über den Status des "Proof of Principle" (M. Xavier et al., Integr. Biol. 2016, 8, 616; A. Mietke et al., Biophysical Journal 2015, Vol. 109, 2023-2036) nicht hinausgekommen.

Bei der am weitesten verbreiteten Methode, die auf Streulicht- kombiniert mit Fluoreszenzdetektion beruht, sind die folgenden wesentlichen Nachteile zu nennen. Die Anschaffungskosten eines solchen kommerziellen Geräts sind bereits in einer sehr einfachen Ausführung enorm hoch und somit nur für zentralisierte Analyselabore rentabel. Dies liegt vor allem daran, dass zum einen die benötigten Lichtquellen und Detektionssysteme mit Fluoreszenzfiltersätzen sehr kostenintensiv sind und zum anderen der Technisierungsgrad enorm hoch ist, um die Anwendungshürde möglichst niedrig zu halten. Letzteres ist vor allem der Komplexität des Verfahrens geschuldet. Zusätzlich ist bei diesem Verfahren von Nachteil, dass unter Umständen eine Markierung des zu vermessenden Zelltyps mittels eines spezifischen Fluoreszenzfarbstoffs erfolgen muss. Ein solches System besitzt zwar eine hohe Selektivität gegenüber spezifischen Proteinen, es kann aber keine Veränderung zum Beispiel der mechanischen Zelleigenschaften erkennen (nur sensitiv gegenüber den gesuchten Proteinhäufigkeiten). Ein großer Nachteil dieser Technik ist die große Messunsicherheit bei pathologischen Proben, die oft manuell kategorisiert werden müssen.

Die auf die Zellmechanik sensible "Real Time - Deformability Cytometry" (RT-DF) (O. Otto et al., Nature Methods 2015, 12, 199-202) hat ebenfalls produktspezifische Einschränkungen. Da die Detektion auf der Auswertung von Bildern beruht, muss das komplette Setup auf einem möglichst guten Mikroskop platziert werden. An dieses muss zur Bildaufnahme eine Hochgeschwindigkeitskamera angeschlossen werden. Beide Geräte sind in ihrer Anschaffung sehr teuer und können sich jeweils im Bereich mehrerer zehntausend Euro bewegen. Die reinen Anschaffungskosten für ein komplettes Gerät belaufen sich somit laut Entwickler momentan auf ca. 150.000 € (inkl. Mikroskop) und sind somit noch höher als für ein fluoreszenzbasiertes Gerät. Jede Messung bedarf einer Probenaufbereitung zur Anpassung der Viskosität und Konzentration. Außerdem müssen das Mikroskop, die Kamera, die Pumpanlage sowie der Mikrofluidik-Kanal stets korrekt justiert werden, da z.B. hochauflösende Mikroskope stets sehr sensitiv in Schärfe und Kontrast auf nicht optimale Einstellungen reagieren. Dies erfordert zumindest aufwändig geschultes oder gar hochqualifiziertes Laborpersonal. Durch die mechanischen Restriktionen und den hohen Finanzbedarf eines solchen Aufbaus ist eine Skalierbarkeit ebenfalls nur sehr eingeschränkt gegeben. Durch die dreidimensionale Datenstruktur der Bilder sind die Verarbeitungskapazitäten in Echtzeit mit moderner Computertechnologie ebenfalls limitiert. Gleichzeitig stellt sich hierdurch eine Verarbeitungslatenz ein, was die Verwendung als Sortiereinrichtung beeinträchtigt, da Latenz in verminderter Selektivität resultiert. Es werden laut Literatur Zellraten von ca. 1.000 Zellen/s erreicht (O. Otto et al., Nature Methods 2015, 12, 199-202). Das ist zu wenig, um beispielsweise große Mengen an Blut zu untersuchen. Deshalb wäre eine Skalierung oder Parallelisierung der Methoden wünschenswert, was aber wie oben bereits erwähnt nicht einfach möglich ist. Das endgültige Analyseergebnis liegt nach Aussage des Herstellers etwa 15 Minuten verzögert vor, was eine Echtzeitüberwachung verhindert.

Die Raman-spektroskopische Zytometrie, welche auf dem spezifischen Ramansignal einer Zelle basiert und wie die Deformationszytometrie markerfrei ist, hat ebenfalls erhebliche Einschränkungen. Auch dieser Aufbau ist sehr teuer in der Anschaffung, da die Ramansignalstärke sehr gering ist und somit ein enormer Aufwand zur Verstärkung und Rauschreduzierung betrieben werden muss. Das Signal-Rausch-Verhältnis ist im Normalfall im mittleren einstelligen Bereich bei Integrationszeiten unter einer Sekunde. Damit ergibt sich der maximale Durchsatz einer solchen Einheit zu etwa 1 Zelle/s. Durch die hohen Anschaffungskosten und Dimensionen der Detektoren (diese müssen zur Verbesserung des Signal-Rausch-Verhältnisses gekühlt werden) ist eine Skalierbarkeit ebenfalls nur sehr bedingt möglich.

Die Nachteile des "Optical Stretcher" sind ebenfalls ähnlich zu denen der anderen Verfahren. Die Anschaffungskosten liegen auf Grund der Komplexität und der erforderlichen Hochleistungslaser und Detektoren bei mehr als 250.000 €. Gleichzeitig ist die Detektionsrate auf etwa 2 Zellen/s limitiert, da zur Messung die Zelle gefangen werden muss und die Relaxation von dieser nach einer Deformation beobachtet wird. Dieses Verfahren stellt somit auch hohe Anforderungen an den hydrodynamischen Teilaufbau mit integrierten optischen Fasern. Trotz hoher Laserleistung sind die Streckkräfte sehr klein, wodurch sich eine Einschränkung auf relativ weiche Zelltypen ergibt. Das Verfahren erfordert weiterhin hohe Qualifikation und Aufmerksamkeit des Bedieners, da die Vorrichtung äußerst sensitiv auf Justier-Ungenauigkeiten reagiert und die Überwachung des Prozesses manuell erfolgt. Die Systemskalierbarkeit ist durch letzteren Punkt und der Tatsache, dass je Stretcher ein eigener 4 Watt Single-Mode Laser benötigt wird, ebenfalls nahezu ausgeschlossen.

US 2013/0177935 A1 bezieht sich auf Beispiele von mikrofluidischen Vorrichtungen und Verfahren zum Messen der Größe, Zirkularität und Verformbarkeit von Zellen gemäß dem Stand der Technik.

Zusammenfassend ergeben sich somit die folgenden Nachteile für die aus dem Stand der Technik bekannten Verfahren:

Konventionelle Durchflusszytometrie:

- benötigt Markierung mit Fluoreszenzfarbstoff oder anderen spezifischen Markern zur Erhöhung der Spezifizität
- Optiken sind teuer und deshalb ebenfalls nur bedingt skalierbar, woraus hohe Investitionskosten resultieren
- enormer Technisierungsgrad ist notwendig, um die verschiedenen Messsysteme zu integrieren
- pathologische Veränderungen können meist nur manuell kategorisiert werden
- nicht als Sortierer beispielsweise zur Blutaufbereitung geeignet

Deformationszytometrie:

- hohe Investitionskosten > 150.000 €
- Skalierbarkeit ist auf Grund mechanischer Einschränkungen nicht gegeben (außerdem skalieren Kosten bei Parallelisierung mit)
- Justierarbeit durch fachkundiges Personal ist notwendig (Mikroskop, Pumpanlage, ... )
- vergleichsweise langsame Messtechnik ist nicht zur Sortierung großer Zellmengen geeignet, da Parallelisierung aufwändig ist
- endgültiges Analyseergebnis wird ca. 15 min verzögert erhalten

Ramanspektroskopische Zytometrie:

- äußerst schlechte Signalstärke limitiert Durchsatzrate (Integrationszeit)
- Raman-Ausstattung ist noch deutlich kostenintensiver als alle anderen Verfahren
- sehr eingeschränkt skalierbar

Optischer Stretcher:

- langsame Detektionsrate < 2 Zellen/s
- enorme Anschaffungskosten > 250.000 €
- Bedienung ist nur durch hochqualifiziertes Fachpersonal möglich
- beschränkt auf weiche Zelltypen, da Streckkräfte sehr klein sind
- Skalierbarkeit ist nicht gegeben

Ausgehend hiervon war es somit die Aufgabe der vorliegenden Erfindung ein kostengünstiges Verfahren zur Analyse von Zellen bereitzustellen, welches auf einfache Weise durchführbar ist und eine Analyse der Zellen in hoher Geschwindigkeit ermöglicht, ohne dass eine Markierung der Zellen mit Fluoreszenzfarbstoffen oder mit anderen spezifischen Markern notwendig ist. Zudem war es die Aufgabe der vorliegenden Erfindung eine kostengünstige Vorrichtung zur Durchführung eines solchen Verfahrens bereitzustellen.

Diese Aufgabe wird bezüglich eines Verfahrens mit den Merkmalen des Patentanspruchs 1 und bezüglich einer Vorrichtung mit den Merkmalen des Patentanspruchs 6 gelöst.

Die jeweilig abhängigen Patentansprüche stellen dabei vorteilhafte Weiterbildungen dar.

Erfindungsgemäß wird somit ein Verfahren zur Untersuchung von Zellen angegeben, bei welchem

a) Zellen mit Hilfe einer Einheit zur Vereinzelung von Zellen vereinzelt werden,

b) die vereinzelten Zellen einen Messbereich einer Einheit zur ortsaufgelösten Strahlungsintensitätsmessung passieren, wobei für mindestens eine der vereinzelten Zellen beim Passieren des Messbereichs eine zeitliche Abfolge von räumlichen Intensitätsmustern einer von der Zelle ausgehenden und/oder beeinflussten elektromagnetischen Strahlung erstellt wird,

c) der optische Fluss von jeweils zwei der räumlichen Intensitätsmuster für zumindest einen Teil der zeitlichen Abfolge von Intensitätsmustern mit Hilfe einer Recheneinheit berechnet wird, und

d) eine Auswertung der berechneten optischen Flüsse erfolgt wobei bei der Auswertung der optischen Flüsse in Schritt d) zumindest eine Eigenschaft der Zelle bestimmt wird, welche ausgewählt ist aus der Gruppe bestehend aus der Form der Zelle, der Zellgröße, des Zellvolumens, der Zellart, der Morphologie, der Deformation der Zelle sowie Kombinationen hiervon.

Im erfindungsgemäßen Verfahren können biologische Zellen jeglicher Art und Herkunft analysiert werden. Die Zellen werden dabei bevorzugt als suspendierte Zellen eingesetzt, wobei besonders bevorzugt eine wässrige Suspension der zu untersuchenden Zellen verwendet wird. Besonders bevorzugt wird die Suspension von Zellen durch die Einheit zur Vereinzelung von Zellen fließen gelassen, wobei die Zellen durch diese Einheit zunächst vereinzelt werden und anschließend beim Durchfließen dieser Einheit einzeln bzw. vereinzelt den Messbereich der Einheit zur ortsaufgelösten Strahlungsintensitätsmessung passieren.

In Schritt a) des Verfahrens werden die Zellen zunächst vereinzelt, wobei dies mithilfe einer Einheit zur Vereinzelung von Zellen geschieht. Als eine solche Einheit kann ein physikalisches System dienen, z.B. querschnittsbegrenzende Fluidröhren. Insbesondere kann als Einheit zur Vereinzelung von Zellen ein Mikrokanal oder ein Mikrofluidikanal verwendet werden. In diesem Fall werden die Zellen in der Regel am Eingang eines solchen Kanals vereinzelt. Aber auch die Verwendung eines komplexeren physikalischen, chemischen und/oder optischen Systems zur Vereinzelung von Zellen ist möglich, genauso wie die Verwendung eines Systems mit Antikörperreaktionen oder die Verwendung einer optischen Pinzette. Auch eine statistische Vereinzelung durch entsprechende Verdünnung der Ursprungssuspension ist möglich.

Nachdem die Zellen vereinzelt wurden, passieren sie in Schritt b) des Verfahrens einen Messbereich einer Einheit zur ortsaufgelösten Strahlungsintensitätsmessung. Während die Zellen die Einheit zur ortaufgelösten Strahlungsintensitätsmessung passieren, geht von ihnen elektromagnetische Strahlung aus und/oder wird von Ihnen elektromagnetische Strahlung beeinflusst. Dies kann beispielsweise dadurch erreicht werden, dass die Zellen mit elektromagnetischer Strahlung bestrahlt werden während und/oder bevor sie den Messbereich der Einheit zur ortsaufgelösten Strahlungsintensitätsmessung passieren. Diese Strahlung kann dann von den Zellen z.B. gestreut werden oder auch modifiziert und wieder abgegeben werden. Anschließend kann diese (gestreute oder abgegebene) Strahlung von der Einheit zur ortsaufgelösten Strahlungsintensitätsmessung erfasst werden. Die Bestrahlung der Zellen kann beispielsweise mit einfachem undefiniertem Umgebungslicht, wie z.B. Tageslicht oder herkömmlicher Raumbeleuchtung, erfolgen. Es kann aber auch eine Bestrahlung mit einer Taschenlampe, einem Laser, einer Leuchtdiode oder einer anderen Bestrahlungsquelle erfolgen. Die Bestrahlung kann mit sichtbarem Licht, mit elektromagnetischer Strahlung aus dem UV-Bereich, elektromagnetischer Strahlung aus dem IR-Bereich, aber auch mit jeder anderen Form elektromagnetischer Strahlung erfolgen.

In Schritt b) des Verfahrens wird für mindestens eine der vereinzelten Zellen beim Passieren des Messbereichs eine zeitliche Abfolge von räumlichen Intensitätsmustern der von der Zelle ausgehenden elektromagnetischen Strahlung mithilfe der Einheit zur ortsaufgelösten Strahlungsintensitätsmessung erstellt. Dies bedeutet, dass letztlich für zumindest eine der den Messbereich passierenden vereinzelten Zellen eine Messung mithilfe der Einheit zur ortaufgelösten Strahlungsintensitätsmessung durchgeführt wird. Bei dieser Messung wird die ausgehende elektromagnetische Strahlung von der den Messbereich passierenden Zelle an mehreren zeitlich aufeinanderfolgenden Punkten durch die Einheit zur ortsaufgelösten Strahlungsintensitätsmessung erfasst, wobei für jeden einzelnen der Zeitpunkte ein räumliches Intensitätsmuster erstellt wird. Unter einem solchen räumlichen Intensitätsmuster ist dabei die räumliche Verteilung der Intensität der von der Zelle ausgehenden und/oder beeinflussten elektromagnetischen Strahlung zu verstehen. Es wird also letztlich für verschiedene Zeitpunkte erfasst, welche Strahlungsintensität von den einzelnen Stellen des Messbereichs ausgeht, während die vereinzelte Zelle den Messbereich passiert. Auf diese Weise ergibt sich für jeden Messzeitpunkt ein eindimensionales oder zweidimensionales Intensitätsmuster, welches die räumliche Verteilung der von der Zelle ausgehenden und/oder beeinflussten elektromagnetischen Strahlung beschreibt, während die Zelle den Messbereich passiert.

Beim räumlichen Intensitätsmuster handelt es sich bevorzugt um ein zweidimensionales Intensitätsmuster. Es kann sich jedoch auch um ein eindimensionales Intensitätsmuster handeln.

Es wird für jeweils eine vereinzelte Zelle eine zeitliche Abfolge von Intensitätsmustern erstellt. Dies bedeutet, dass zu mehreren unterschiedlichen Zeitpunkten räumliche Intensitätsmuster der gleichen Zelle gemessen werden, während diese den Messbereich passiert. Es ergibt sich somit eine zeitliche Abfolge räumlicher Intensitätsmuster der von jeweils einer Zelle ausgehenden und/oder beeinflussten elektromagnetischen Strahlung. Für den Fall, dass für mehrere der vereinzelten Zellen beim Passieren des Messbereichs eine zeitliche Abfolge von räumlichen Intensitätsmustern einer von der Zelle ausgehenden und/oder beeinflussten elektromagnetischen Strahlung erstellt wird, ist es somit wesentlich, dass hierbei für jeweils eine einzelne Zelle der vereinzelten Zellen eine eigene zeitliche Abfolge von räumlichen Intensitätsmustern der von der Zelle ausgehenden und/oder beeinflussten elektromagnetischen Strahlung erstellt wird. Auf diese Weise kann jede einzelne Zelle für sich getrennt von den anderen Zellen analysiert werden.

Die Erstellung einer zeitlichen Abfolge von räumlichen Intensitätsmustern der von einer Zelle ausgehenden und/oder beeinflussten elektromagnetischen Strahlung wird dabei vorzugsweise für mehrere, besonders bevorzugt für im Wesentlichen alle, der den Messbereich passierenden Zellen durchgeführt. In diesem Fall wird also für jede einzelne der den Messbereich passierenden Zellen eine eigene zeitliche Abfolge von räumlichen Intensitätsmustern der von ihr ausgehenden oder beeinflussten elektromagnetischen Strahlung erstellt. Auf diese Weise kann für jede der den Messbereich passierenden Zellen eine eigene zeitliche Abfolge von räumlichen Intensitätsmustern erhalten werden, die in den weiteren Verfahrensschritten c) und d) umgerechnet und ausgewertet werden kann.

Die Einheit zur ortsaufgelösten Strahlungsintensitätsmessung kann eine geometrische Anordnung elektronischer Bauelemente enthalten. Diese Anordnung kann vorzugsweise eine Photodiode, einen CCD-Sensor und/oder eine Kamera umfassen. Bei der Einheit zur ortsaufgelösten Strahlungsintensitätsmessung kann es sich auch um ein segmentiertes Bauelement zur Strahlungsintensitätsmessung handeln. Denkbar sind eindimensionale Segmentierungen, z.B. eine Reihe von Photodioden, zweidimensionale Segmentierungen, z.B. eine Anordnung von Photodioden in Zeilen und Spalten, wobei auch Auflösungen dieser Form wie Waben die zweidimensionale Segmentierung erfüllen würden.

Beispielsweise kann als Einheit zur ortsaufgelösten Strahlungsintensitätsmessung ein Sensor eingesetzt werden, wie er in optischen Mäusen verwendet wird. Denkbar sind aber auch komplexere Sensoren aus dem Kamerabereich, die unterschiedliche Farben detektieren und die Intensitäten von Sensorpunktarrays zu einem optischen Pixel integrieren, dem neben der Ortsinformation eine Farbe- und eine Intensitätsinformation zugeordnet wird.

In Schritt c) des Verfahrens wird der optische Fluss von jeweils zwei der räumlichen Intensitätsmuster für zumindest einen Teil der Abfolge von Intensitätsmustern mit Hilfe einer Recheneinheit berechnet.

Der optische Fluss ist eine Größe, welche die räumliche Veränderung bzw. Bewegung von Intensitäten über die Zeit beschreibt. Der optische Fluss wird dabei in der Regel als ein Vektorfeld dargestellt, wobei die Vektoren letztlich den räumlichen Verlauf von Intensitäten zwischen zwei Zeitpunkten darstellen.

In Schritt c) erfolgt also eine Umrechnung der in Schritt b) erstellten räumlichen Intensitätsmuster der jeweils einzelnen Zelle in optische Flüsse. Hierbei wird aus jeweils zwei der räumlichen Intensitätsmuster der in Schritt b) erstellen zeitlichen Abfolge von räumlichen Intensitätsmustern, welche für jeweils eine der Zellen erstellt wurde, ein optischer Fluss berechnet. Insgesamt wird somit für jeweils eine einzelne Zelle eine Mehrzahl von optischen Flüssen erhalten, die im anschließenden Schritt d) des Verfahrens ausgewertet werden können.

Vorzugsweise wird in Schritt c) der optische Fluss von jeweils zwei der räumlichen Intensitätsmuster für die gesamte Abfolge von Intensitätsmustern (für jeweils eine Zelle) mit Hilfe einer Recheneinheit berechnet. Hierbei kann beispielsweise für alle zeitlich direkt aufeinanderfolgenden räumlichen Intensitätsmuster der zeitlichen Abfolge jeweils ein optischer Fluss erstellt werden.

Alternativ ist es aber auch möglich nur für einen Teil der zeitlichen Abfolge von Intensitätsmustern die optischen Flüsse zu berechnen, was bedeutet, dass nicht alle der erstellten räumlichen Intensitätsmuster bei der Berechnung der optischen Flüsse verwendet werden.

In Schritt d) des Verfahrens erfolgt schließlich die Auswertung der in Schritt c) berechneten optischen Flüsse. Hierbei kann z.B. durch die für eine Zelle ermittelten optischen Flüsse auf bestimmte Eigenschaften der Zelle geschlossen werden. Basierend hierauf kann somit jede einzelne Zelle für sich bezüglich einzelner Eigenschaften analysiert werden. In anderen Worten kann somit mittels der Auswertung der berechneten optischen Flüsse auf die Eigenschaften der einzelnen Zelle geschlossen werden. Bei diesen Eigenschaften kann es sich um die Form der Zelle, die Zellgröße, das Zellvolumen, die Zellart, die Morphologie oder die Deformation der Zelle sowie Kombinationen hiervon handeln. Weiterhin können biochemische Bestandteile der Zelle wie Farbstoffe quantitativ erfasst werden.

Beispielsweise kann bei der Auswertung zunächst von den berechneten optischen Flüssen auf die Dimensionen und Morphologie der Zelle, deren Deformation und von dieser auf die mechanischen Eigenschaften geschlossen werden. Weiterhin kann durch die Dimensionen der Zelle eine einfache Unterscheidung der Zelltypen erfolgen. Die Bestimmung der mechanischen Eigenschaften basiert darauf, dass sich eine suspendierte Zelle in einer Flüssigkeit durch einen Mikrofluidik-Kanal in einer solchen Weise bewegt, dass sie aufgrund des Geschwindigkeitsgradienten senkrecht zum Kanal verformt wird. Diese Deformation ist z.B. abhängig von der relativen Größe der Zelle zum Kanal sowie deren mechanischen Eigenschaften, speziell dem Schermodul. Der Kern der Erfindung beruht somit auf der Untersuchung von Zellen mittels der Bestimmung und Auswertung des optischen Flusses der von den zu untersuchenden Zellen ausgesandten und/oder beeinflussten elektromagnetischen Strahlung. Aus den berechneten optischen Flüssen können mittels Auswertung bestimmte Eigenschaften der Zellen abgeleitet werden. Die Verwendung des Konzeptes des optischen Flusses erlaubt dabei eine enorme Reduzierung des Datenvolumens. Weiterhin ist eine einfache Systemskalierbarkeit gegeben.

Das Konzept des optischen Flusses ist vor allem durch den Einsatz von optischen Mäusen bekannt. Das Prinzip eines solchen Sensors beruht darauf, dass ein CCD-Chip das Bild der von einer Lichtquelle beleuchteten Unterlage aufnimmt. Bewegt sich der Sensor relativ zur Unterlage, ändert sich das Bild auf dem Sensor. Mithilfe des OF-Algorithmus (OF = optischer Fluss) wird ermittelt, wie sich die Grauwerte zwischen zwei Bildern verschoben haben. Dabei wird berechnet, in welche Richtung sich welcher Anteil des Grauwertes verschoben hat und somit subpixel-Auflösung erreicht. Um die Netto-Bewegung zu bestimmen, wird der optische Fluss sowohl in x- als auch in y-Richtung über den gesamten Sensor gemittelt oder summiert.

Mit der vorliegenden Erfindung ist die Unterscheidung individueller Zellen aufgrund ihrer Eigenschaften, wie z.B. mechanischen Eigenschaften, Morphologie und Größe, möglich. Es können verschiedene Zelltypen unterschieden, aber auch krankhafte Zellveränderungen detektiert werden. Aufgrund der individuellen Messung jeder einzelnen Zelle besteht das theoretische Detektionslimit bei einer einzelnen kranken Zelle.

Bei einer für kommerziell erhältliche Sensoren üblichen Bildrate ergibt sich für das erfindungsgemäße Verfahren ein möglicher Messdurchsatz von mehr als 1.000 Zellen/s. Die Kosten der im Verfahren erforderlichen Vorrichtungen bzw. Einheiten ist sehr gering. Das erfindungsgemäße Verfahren ist somit äußerst kostengünstig und ermöglicht eine Analyse der Zellen in hoher Geschwindigkeit.

Durch den sehr hohen Messdurchsatz bzw. die hohe Messgeschwindigkeit und zudem durch die schnell durchführbare Berechnung der optischen Flüsse kann die Auswertung der optischen Flüsse im erfindungsgemäßen Verfahren in Echtzeit erfolgen. Dies bedeutet, dass bestimmte Eigenschaften der einzelnen Zellen unmittelbar während der Messung bestimmt werden können. Dies hat zur Folge, dass die Zellen bereits nach Passieren des Messbereichs der Einheit zur ortsaufgelösten Strahlungsintensitätsmessung ohne wesentliche zeitliche Verzögerung einem Zellsortierungsschritt unterzogen werden können, bei welchem die einzelnen Zellen anhand der in der Auswertung bestimmten Eigenschaft bzw. Eigenschaften in verschiedene Gruppen aufgeteilt bzw. sortiert werden.

Weiterhin sind die mechanischen Dimensionen der im Verfahren verwendeten Einheiten äußerst gering. Wie bereits erwähnt, passen die im Verfahren verwendete Recheneinheit sowie die Einheit zur ortsaufgelösten Strahlungsintensitätsmessung zusammen auf einen gemeinsamen Computer-Chip.

Eine Markierung der zu analysierenden Zellen mit Fluoreszenz-Markern oder anderen spezifischen Markern ist nicht notwendig, da die erfindungsgemäße Bestimmung und Auswertung des optischen Flusses die Verwendung solcher Marker nicht erfordert. Das erfindungsgemäße Verfahren ist aufgrund dessen auch auf einfachere Weise durchführbar, da auf den komplizierten experimentellen Schritt der Versehung der Zellen mit Fluoreszenzmarkern verzichtet werden kann.

Die einfache Durchführbarkeit des erfindungsgemäßen Verfahrens ergibt sich zudem auch daraus, dass auf die Verwendung komplizierter Geräte und Vorrichtungen, wie z.B. spezieller Mikroskope und Pumpanlagen, verzichtet werden kann.

Durch den einfachen Aufbau und niedrige mechanische Anforderungen lässt sich insgesamt sowohl die Karenzzeit zwischen zwei Messungen als auch die Messzeit selbst reduzieren. Der Aufbau wird einfacher handhabbar und es ist zum Beispiel auch ein Handgerät denkbar, das außerhalb spezialisierter Labors eingesetzt werden kann.

Eine bevorzugte Variante des erfindungsgemäßen Verfahrens ist dadurch gekennzeichnet, dass

- die Auswertung der berechneten optischen Flüsse in Schritt d) durch die Recheneinheit oder durch eine zusätzliche Einheit zur Auswertung der berechneten optischen Flüsse durchgeführt wird, oder

- die Auswertung der berechneten optischen Flüsse in Schritt d) teilweise von der Recheneinheit und teilweise von einer zusätzlichen Einheit zur Auswertung der berechneten optischen Flüsse durchgeführt wird.

Dadurch, dass sowohl die Berechnung der optischen Flüsse als auch deren Auswertung von der Recheneinheit durchgeführt wird, kann der Platz und auch die Kosten für ein weiteres Gerät zur Auswertung eingespart werden, wodurch das Verfahren noch platzsparender und kostengünstiger wird. Zudem ist das Verfahren auf diese Weise unabhängig von zusätzlichen externen Einheiten und kann damit auch mithilfe einer portablen Vorrichtung durchgeführt werden. Die Verwendung einer zusätzlichen Einheit zur Auswertung der berechneten optischen Flüsse ermöglicht hingegen komplizierte Auswertungsvorgänge und damit auch bessere Analysemöglichkeiten. Auch eine graphische Auswertung ist auf diese Weise möglich. Bei der zusätzlichen Einheit zur Auswertung der berechneten optischen Flüsse kann es sich zum Beispiel um einen Computer, vorzugsweise mit einer speziellen Software zur Auswertung, handeln.

Nach dem erfindungsgemäßen Verfahren wird bei der Auswertung der optischen Flüsse in Schritt d) zumindest eine Eigenschaft der Zelle bestimmt, welche vorzugsweise ausgewählt ist aus der Gruppe bestehend aus der Form der Zelle, der Zellgröße (bzw. Länge und Breite der Zelle), des Zellvolumens, der Zellart, der Morphologie, der Deformation der Zelle sowie Kombinationen hiervon.

Eine weitere bevorzugte Variante zeichnet sich dadurch aus, dass bei der Erstellung der zeitlichen Abfolge von Intensitätsmustern in Schritt b) mindestens eine der vereinzelten Zellen mit elektromagnetischer Strahlung bestrahlt wird, wobei die Bestrahlung vorzugsweise durch eine natürliche Strahlungsquelle und/oder eine künstliche Strahlungsquelle erfolgt. Die künstliche Strahlungsquelle ist dabei insbesondere ausgewählt aus der Gruppe bestehend aus kohärenten Strahlungsquellen, partiell kohärenten Strahlungsquellen, inkohärenten Strahlungsquellen, punktförmigen Strahlungsquellen, flächigen Strahlungsquellen sowie Kombinationen hiervon. Bei der Strahlungsquelle kann es sich z.B. um einen Laser handeln. Möglich ist auch eine Bestrahlung der Zellen mittels Dunkelfeldbeleuchtung.

Gemäß einer weiteren bevorzugten Verfahrensvariante werden beim Erstellen der zeitlichen Abfolge von räumlichen Intensitätsmustern in Schritt b) so viele Intensitätsmuster für jeweils eine Zelle erstellt, dass möglichst wenige Diskontinuitäten in den auszuwertenden optischen Flüssen auftreten. Dies wird vorzugsweise dadurch erreicht, dass für die Aufnahmerate (Anzahl der innerhalb einer Sekunde aufgenommenen Intensitätsmuster, fps) gegenüber der Zellgeschwindigkeit v gilt:

$$fps\ [Muster/Sekunde]\ >\ v\ [Pixel/Sekunde].$$

Die Musteranzahl N für einen vollständigen Durchlauf einer Zelle ergibt sich dabei durch

$$N\ [Muster] = (Zellgröße\ [Pixel] + Detektorlänge\ [Pixel]) \cdot \frac{fps\ [Muster/Sekunde]}{v\ [Pixel/Sekunde]}$$

Die Detektorlänge beschreibt dabei die Anzahl an Pixeln einer Richtung auf dem Detektor. Auf diese Weise können Diskontinuitäten, die in den auszuwertenden Signalen, bzw. optischen Flüssen, auftreten können, weitestgehend vermieden werden, woraus eine qualitative Verbesserung der Analysen resultiert.

Eine weitere bevorzugte Variante des erfindungsgemäßen Verfahrens ist dadurch gekennzeichnet, dass von mehreren, bevorzugt allen, der Zellen, welche den Messbereich der Einheit zur ortsaufgelösten Strahlungsintensitätsmessung passieren, mindestens eine Eigenschaft bestimmt wird und im Anschluss an Schritt d) die Zellen basierend auf Unterschieden in dieser mindestens einen Eigenschaft mit Hilfe eines Zellsortierers, bevorzugt eines steuerbaren Tores, in mindestens zwei Gruppen sortiert werden. Durch die hohe Analysegeschwindigkeit im erfindungsgemäßen Verfahren, können die Zellen unmittelbar nach der in Echtzeit erfolgenden Auswertung der optischen Flüsse in Schritt d) in verschiedene Gruppen sortiert werden. Die Sortierung erfolgt dabei aufgrund der im Verfahren analysierten Eigenschaften. Dies erlaubt beispielsweise eine Trennung von gesunden und kranken Blutzellen für große Zellzahlen. Es ist mit dieser Variante des erfindungsgemäßen Verfahrens somit eine besonders schnelle und günstige Sortierung von Zellen möglich, ohne dass hierfür die Zellen mit Fluoreszenzmarken oder anderen speziellen Markern versehen werden müssen.

Gemäß einer weiteren bevorzugten Variante des erfindungsgemäßen Verfahrens wird in Schritt b) für mindestens eine der Zellen eine zeitliche Abfolge von Bildern der den Messbereich passierenden vereinzelten Zelle erstellt. Hierbei wird dann anschließend in Schritt c) der optische Fluss von jeweils zwei (zeitlich aufeinanderfolgenden) Bildern für zumindest einen Teil der zeitlichen Abfolge von Bildern berechnet. In dieser Ausführungsform handelt es sich bei den räumlichen Intensitätsmustern also um (zweidimensionale) Bilder.

Eine weitere Verfahrensvariante ist dadurch gekennzeichnet, dass ein Teil jeder Zelle beim Passieren des Messbereichs so verdeckt ist, dass die von diesem Teil der Zelle ausgehende elektromagnetische Strahlung nicht die Einheit zur ortsaufgelösten Strahlungsintensitätsmessung erreicht. Dies kann beispielsweise dadurch realisiert werden, dass ein Teil des direkten Weges zwischen dem Sensor und dem Messbereich der Einheit zur ortsaufgeösten Strahlungsintensitätsmessung entsprechend blockiert wird, z.B. durch Abdeckung. Bei Verwendung eines Mikrofluidik-Kanals kann beispielsweise ein Teil des Kanals abgedeckt werden. Bevorzugt ist im Wesentlichen die Hälfte jeder Zelle verdeckt. Durch Verdeckung eines Teils bzw. der Hälfte der Zelle kann ein Symmetriebruch erreicht werden. Dies ist insbesondere dann sinnvoll, wenn die zu bestimmenden Eigenschaften ausschließlich durch Auswertung von symmetrischen Deformationen erhalten werden können. Die Bestimmung eines mittleren optischen Flusses führt in diesem Fall in der Regel nur dann zu einem auswertbaren Ergebnis, wenn bei der Messung ein solcher Symmetriebruch vorgenommen wird.

Bei der Auswertung in Schritt d) können die berechneten optischen Flüsse vorzugsweise zunächst in übersichtlichere und leichter auszuwertende Einzelwerte umgerechnet werden. Beispielsweise kann hierfür der jeweilige optische Fluss der jeweils zwei zeitlich aufeinanderfolgenden räumlichen Intensitätsmuster in jeweils zwei Werte OFx und OFy umgerechnet werden. Die Berechnung dieser Werte kann beispielsweise dadurch erfolgen, dass der jeweilige (zweidimensionale) optische Fluss einmal auf eine x-Achse und einmal auf eine zur x-Achse linear unabhängige y-Achse projiziert wird, wobei anschließend der jeweilige Mittelwert über alle Pixel der jeweiligen Projektion gebildet wird. OFx und OFy würden dann schließlich jeweils einem dieser Mittelwerte entsprechen. Statt dem Mittelwert der einzelnen Werte kann allerdings auch ein anderer Wert, z.B. die Summe der einzelnen Werte, verwendet werden. Die beiden Werte OFx und OFy können prinzipiell für jeden der ermittelten optischen Flüsse berechnet werden, wodurch das Datenvolumen erheblich verkleinert wird, da letztlich statt eines ganzen Vektorbildes pro optischem Fluss nur noch zwei einfache Werte verarbeitet und weiter ausgewertet werden müssen.

Bei Anwendung der eben beschriebenen bevorzugten Auswertungsmethode resultiert aus der Verwendung des optischen Flusses als Messgröße eine sehr geringe Anforderung an Speicherplatz, da bei der Auswertung des optischen Flusses mit lediglich zwei Werten (OFx und OFy) angegeben werden kann. Dies garantiert eine rasche Verarbeitung des Signals. In den konventionellen Geräten steht dem ein volles Bild einer Kamera gegenüber, welches um Grö-βenordnungen speicher- und prozessaufwändiger ist.

Aus den Werten OFx und OFy der optischen Flüsse für jede einzelne Zelle können anschließend ein Signal über die Zeit OFx(t) und ein Signal über die Zeit OFy(t) generiert werden. Auf diese Weise kann für jede untersuchte Zelle letztlich ein Signalpaar OFx(t) und OFy(t) erhalten werden. Diesem Signalpaar kann schließlich ein Wert für eine bestimmte Eigenschaft der Zelle zugeordnet werden. Dies geschieht vorzugsweise unter Verwendung einer Kalibrierung. Die Signale OFx(t) und OFy(t) können beispielsweise auch innerhalb eines Graphen veranschaulicht werden. Aus dem Verlauf des Graphen können dann Eigenschaften der Zelle abgeleitet werden. Aber auch die Betrachtung von einem der Werte OFx(t) bzw. OFy(t) allein, kann Informationen über die einzelne Zelle liefern.

Die vorliegende Erfindung betrifft auch eine Vorrichtung zur Untersuchung von Zellen, enthaltend

- eine Einheit zur Vereinzelung von Zellen,

- eine Einheit zur ortsaufgelösten Strahlungsintensitätsmessung, welche so ausgebildet ist, dass sie eine zeitliche Abfolge von Intensitätsmustern einer von einer vereinzelten Zelle ausgehenden und/oder beeinflussten elektromagnetischen Strahlung erstellen kann, während die Zelle einen Messbereich der Einheit zur ortsaufgelösten Strahlungsintensitätsmessung passiert, und

- eine Recheneinheit zur Berechnung des optischen Flusses von jeweils zwei der erstellten Intensitätsmuster sowie zur Auswertung der berechneten optischen Flüsse.

Eine bevorzugte Ausführungsform der erfindungsgemäßen Vorrichtung ist dadurch gekennzeichnet, dass die Vorrichtung eine zusätzliche Einheit zur Auswertung der berechneten optischen Flüsse enthält. Auf diese Weise kann die Auswertung entweder teilweise oder auch komplett von dieser zusätzlichen Einheit durchgeführt werden, wodurch auch komplizierte Auswertungsmethoden oder auch graphische Auswertungen möglich sind. Als zusätzliche Einheit zur Auswertung kann z.B. ein externer Computer eingesetzt werden, der vorzugsweise über eine spezielle Software zur Auswertung verfügt.

In einer weiteren bevorzugten Ausführungsform enthält die Vorrichtung eine Strahlungsquelle. Die Strahlungsquelle ist ausgewählt aus der Gruppe bestehend aus kohärenten Strahlungsquellen, partiell kohärenten Strahlungsquellen, inkohärenten Strahlungsquellen, punktförmigen Strahlungsquellen, flächigen Strahlungsquellen sowie Kombinationen hiervon. Es kann auch eine Strahlungsquelle zur Dunkelfeldbeleuchtung verwendet werden.

Weiterhin ist bevorzugt, dass die Einheit zur ortsaufgelösten Strahlungsintensitätsmessung eine geometrische Anordnung elektronischer Bauelemente enthält, welche bevorzugt eine Photodiode, einen CCD-Sensor und/oder eine Kamera umfasst.

Eine weitere bevorzugte Ausführungsform der erfindungsgemäßen Vorrichtung zeichnet sich dadurch aus, dass die Vorrichtung ein System zur Abbildung der Zellen auf die Einheit zur ortsaufgelösten Strahlungsintensitätsmessung enthält. Bei diesem System kann es sich z.B. um ein Linsensystem handeln. Ein solches Linsensystem kann beispielsweise mit bekannten Prozessen aus der Lithographie erstellt werden, wobei die Struktur vorzugsweise direkt in den Photolack geschrieben wird. Das Abbildungssystem könnte aber auch durch eine einfache Lochblende realisiert werden. Durch das System zur Abbildung der Zellen können die Auflösung sowie die Signalhöhe der von den Zellen ausgehenden Strahlung erhöht werden, wodurch gerade bei schwacher Strahlung der Zellen eine qualitativ bessere Analyse der Zellen möglich wird.

Weiterhin ist es bevorzugt, dass die Einheit zur ortsaufgelösten Strahlungsintensitätsmessung und die Recheneinheit auf einem gemeinsamen Halbleiter-Chip angeordnet sind. Sollte die Vorrichtung zusätzlich eine Strahlungsquelle und/oder eine zusätzliche Einheit zur Auswertung der berechneten optischen Flüsse enthalten, so können auch diese Strahlungsquelle und/oder diese zusätzliche Einheit zur Auswertung der berechneten optischen Flüsse auf dem genannten gemeinsamen Halbleiterchip angeordnet sein. Diese Ausführungsform ist besonders vorteilhaft, da so eine besonders platzsparende Vorrichtung erhalten wird, die auch als portable Version ausgebildet sein kann.

Gemäß einer weiteren bevorzugten Ausführungsform ist die Einheit zur Vereinzelung von Zellen ein Mikrokanal, vorzugsweise ein Mikrofluidikkanal. Die Mikrokanäle können zum Beispiel mit bekannten Prozessen aus der Lithographie erstellt werden. Hierzu kann die Struktur direkt in Photolack geschrieben werden.

Weiterhin ist es bevorzugt, dass die erfindungsgemäße Vorrichtung einen Zellsortierer, bevorzugt ein steuerbares Tor, enthält. In dieser Ausführungsform können die Zellen mit der Vorrichtung nicht nur schnell, kostengünstig und auf einfache Weise untersucht werden, sondern auch eine sich sofort an die Untersuchung der Zellen anschließende Sortierung der Zellen anhand der analysierten Eigenschaften ist möglich.

Besonders bevorzugt ist, dass die erfindungsgemäße Vorrichtung zur Untersuchung von Zellen bzw. eine der beschriebenen Ausführungsformen davon eine Vorrichtung zur Ausführung des erfindungsgemäßen Verfahrens zur Untersuchung von Zellen bzw. einer der beschriebenen bevorzugten Varianten davon ist.

Durch die Erfindung ergeben sich zahlreiche Vorteile gegenüber konventionellen Methoden in der (Deformations-)Zytometrie. Die erfindungsgemäße Vorrichtung kann unter Verwendung von Massenprodukten aus der Elektronikbranche betrieben werden, was in sehr niedrigen Kosten, einer sehr einfachen Durchführbarkeit sowie einer sehr einfachen Realisierbarkeit und Inbetriebnahme resultiert.

Durch die weite Verbreitung von Sensoren, die als Einheit zur ortsaufgelösten Strahlungsintensitätsmessung verwendet werden können, (z.B. Maus-Sensoren) sind auch die Preise gegenüber einer Highspeed-Kamera um Größenordnungen geringer. Des Weiteren benötigt die erfindungsgemäße Vorrichtung kein Mikroskop, was die Kosten erneut um einen wesentlichen Anteil reduziert. Durch den Wegfall großer raumeinnehmender Geräte wie Mikroskop und Kamera kann das komplette System auf einem Computer-Chip integriert werden. Dadurch vereinfacht sich nicht nur das Einstellen der Messkammer (kein Laborfachpersonal notwendig, Verringerung des Faktor Menschen), sondern auch die potenziellen Produktionskosten verringern sich enorm.

Durch die niedrigen Kosten erweitert sich der Einsatzbereich des Gerätes in gleichem Maße. Die niedrigen Investitionskosten erlauben die Erschließung vollkommen neuer Geschäftsfelder, beziehungsweise Abnehmer. Zusätzlich kann das Gerät vollständig portabel ausgeführt sein und kann somit bei Bedarf leicht umgezogen werden. Auch der Einsatz in technisch weniger weit entwickelten Regionen ist denkbar.

Im Gegensatz zur Fluoreszenz Zytometrie fällt der Anfärbeprozess weg. Das heißt, die Kosten für spezifische Farbstoffe werden ebenso eingespart wie der zeitintensive Färbeprozess.

In einer bevorzugten Ausführungsform kann die erfindungsgemäße Vorrichtung mehrere Einheiten zur Vereinzelung von Zellen und/oder mehrere Einheiten zur ortsaufgelösten Strahlungsintensitätsmessung enthalten. Dies ermöglicht es den Untersuchungs-Prozess massiv zu parallelisieren. Mit Hilfe der heutigen Halbleiter- und Chip-Technologie ist eine solche Integration, d.h. ein Einbau mehrerer Sensoren und Kanäle in ein Zytometer, kein Problem. Dies erhöht die Anzahl an analysierten Zellen pro Sekunde und führt so zu einem noch belastbareren Ergebnis.

Zusammenfassend ergeben sich somit u.a. folgende Vorteile der vorliegenden Erfindung:

- niedrige Infrastrukturkosten
- niedrige Verbrauchsmittelkosten
- schnellere, robustere Berechnung als RT-DC (real-time deformability cytometry)
- hohe Durchsatzrate
- auf einem Chip integrierbar
- einfaches Einstellen der Vorrichtung
- parallelisierbar
- Kleinanwendergeräte möglich
- markerfrei

Vorzugsweise wird das erfindungsgemäße Verfahren zur Untersuchung von Zellen bzw. eines seiner bevorzugten Varianten mit einer erfindungsgemäßen Vorrichtung zur Untersuchung von Zellen bzw. mit einer der beschriebenen bevorzugten Ausführungsformen davon durchgeführt.

Die vorliegende Erfindung wird anhand der nachfolgenden Figuren und Beispiele näher erläutert ohne die Erfindung auf die speziell dargestellten Parameter zu beschränken.

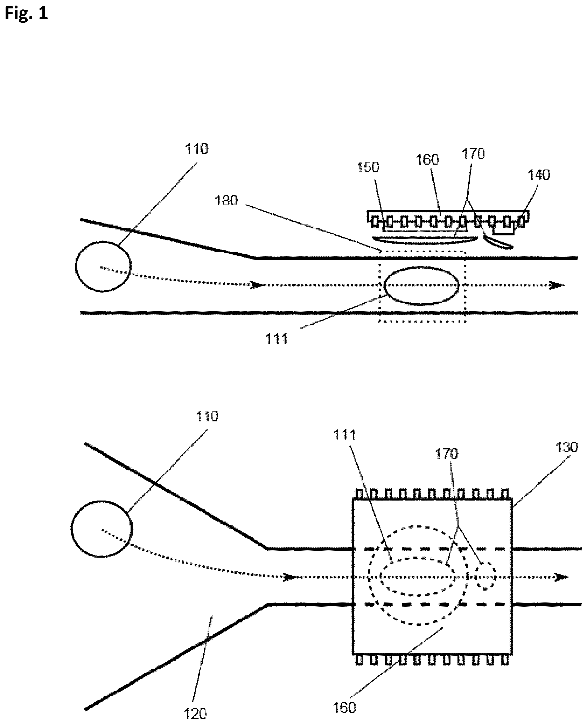

Fig. 1 zeigt eine spezielle Ausführungsform der erfindungsgemäßen Vorrichtung in zwei verschiedenen Ansichten. In der oberen Abbildung ist eine Seitenansicht zu sehen. Die untere Abbildung zeigt eine Ansicht aus der Vogelperspektive. Die dargestellte Vorrichtung enthält einen Mikrokanal 120. Gezeigt ist, wie eine Zelle 110, 111 durch den Mikrokanal 120 fließt, wobei die Zelle 110 am Eingang des Kanals zunächst vereinzelt und deformiert (111) wird. Zudem enthält die gezeigte Vorrichtung einen Computerchip 130, welcher einen Laser 140, eine Kamera 150 und eine Recheneinheit 160 enthält. Zwischen dem Computerchip 130 und dem Mikrokanal 120 ist ein Linsensystem 170 angeordnet. Die Zelle 111 passiert, nachdem sie vereinzelt wurde, den Messbereich 180 der Kamera 150. Hierbei wird die Zelle 111 mit elektromagnetischer Strahlung aus dem Laser bestrahlt. Beim Passieren des Messbereichs 180 wird mithilfe des Linsensystems 170 die Zelle auf die Kamera 150 abgebildet, wobei mithilfe der Kamera 150 eine zeitliche Abfolge von räumlichen Intensitätsmustern der von der Zelle ausgehenden elektromagnetischen Strahlung erstellt wird. Im Anschluss werden mithilfe der Recheneinheit 160 die optischen Flüsse von jeweils zwei der räumlichen Intensitätsmuster für die gesamte Abfolge von Intensitätsmustern berechnet. Danach werden die optischen Flüsse entweder direkt von der Recheneinheit 160 oder von einer nicht abgebildeten externen Einheit ausgewertet.

Im Folgenden wird anhand einer exemplarischen Messung eine mögliche Variante zur Auswertung der optischen Flüsse im erfindungsgemäßen Verfahren verdeutlicht. Bei den gezeigten Daten handelt es sich um reale Messergebnisse. Hierbei wird gezeigt, dass bestimmte Eigenschaften, wie Form und Größe, einer sich in einem Mikrofluidikkanal bewegenden Zelle mit Hilfe des optischen Flusses festgestellt werden können.

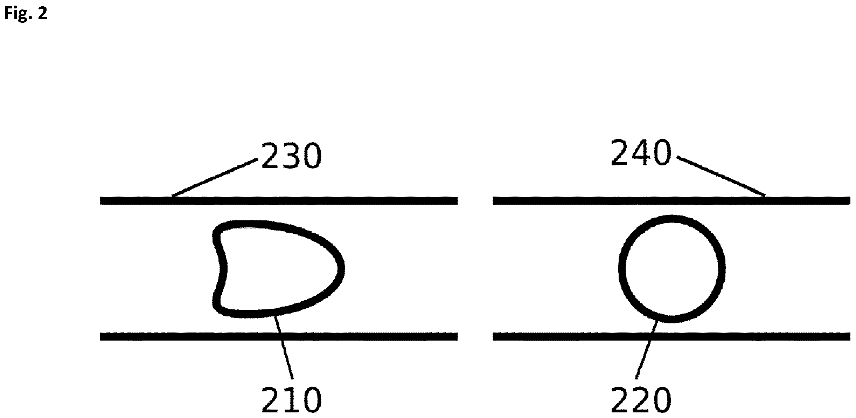

Hierzu wurden zwei unterschiedliche Zellformen getestet, eine runde Zelle und eine "bullet-shaped" Zelle. Beide Zellen sind schematisch in Fig. 2 dargestellt.

Fig. 2 zeigt links eine schmatische Darstellung einer "bullet-shaped" Zelle 210. Diese Form tritt beispielsweise auf, wenn zu Beginn runde Zellen beim Durchfließen eines Kanals aufgrund eines Druckgradienten über den Querschnitt des Kanals geschert und somit deformiert werden. Rechts in Fig. 2 ist eine kugelförmige Zelle 220 (z.B. Leukozyt) gezeigt, die sich deutlich von der "bullet-shaped" Zelle unterscheidet. Der Rand der Kanäle 230, 240 ist ebenfalls sichtbar.

Während der Messung bewegt sich eine Zelle mit konstanter Geschwindigkeit durch den Kanal. Für den Test des Systems wurde eine Hochgeschwindigkeitskamera verwendet. Aus den Bildern wurde in einem separaten Schritt der optische Fluss mithilfe der Horn-Schunk Methode von Bild zu Bild berechnet. Dies liefert einen optischen Fluss für jeden Pixel des Bildes. Der OF aller Pixel eines Bildes wurde dann zusammengezählt. Eine Erweiterung des Verfahrens wurde derart durchgeführt, dass nicht ein Teil des Kanals zur Symmetriebrechung verdeckt, sondern in der Berechnung des OF die obere und untere Bildhälfte getrennt voneinander betrachtet wurden. Daraus ergibt sich dann das OF-Signal zu OFx = OFxunten + OFxoben und OFy = OFyunten - OFyoben. Dies stellt keine Einschränkung der vorgestellten Methode dar. Die x-Komponente entspricht dabei dem Signal über die Zeit OFx(t) und die y-Komponente dem Signal über die Zeit OFy(t). Um eine hohe Durchflussrate zu erreichen und genügend Verformung durch Scherkräfte im Kanal zu erzeugen, müssen die Zellen möglichst schnell durch den Kanal fließen. Mit einer gewählten Geschwindigkeit von ca. 4,85 cm/s ist gewährleistet, dass sowohl die Verformung aufgrund der Scherung im Kanal groß genug ist, als auch die Durchflussmenge an Zellen ausreichend ist, um genügend Zellen pro Zeiteinheit für eine schnelle und statistisch aussagekräftige Messung zu erhalten.

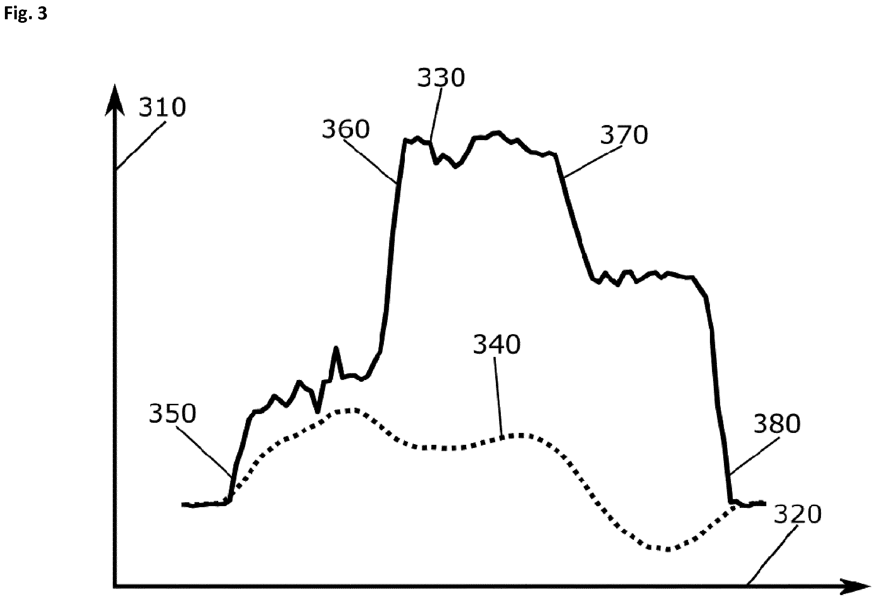

Fig. 3 zeigt eine graphische Darstellung des optischen Flusses einer realen gemessenen "bullet-shaped" Zelle vergleichbar mit der Schemazeichnung aus Fig. 2 beim Passieren des Gesichtsfelds des Sensors. Die Daten wurden wie folgt aufgearbeitet. Der optische Fluss wurde mithilfe der Matlab-Funktion "opticalFlowHS" erhoben und anschließend geglättet, um Rauschen im Signal zu kompensieren und die weitere Datenverarbeitung zu erleichtern. Auf den Achsen ist der optische Fluss 310 über der Zeit 320 aufgetragen. Die durchgezogene Kurve 330 zeigt den Verlauf OFx(t) an, während die unterbrochene Kurve 340 den Verlauf OFy(t) darstellt. Sobald die Zelle in das Gesichtsfeld des Sensors eindringt, steigt der Fluss in x-Richtung an (350). Der OF nimmt so lange zu, bis die Rundung der Zelle gänzlich im Gesichtsfeld liegt. Bewegt sie sich weiter hinein, ändert sich der OF nur wenig bis das hintere Ende der Zelle sich im Bereich des Sensors befindet (360). Bewegt sich die Zelle durch den Kanal und ist vollständig sichtbar, so hat der OF einen konstanten Wert. Erst wenn die Zelle das Gesichtsfeld wieder verlässt, verringert sich der OF stufenweise (370) bis er wieder bei 0 ist, wenn die Zelle den Sensorbereich vollständig verlassen hat (380). Aus dieser Kurve können nun verschiedene Parameter berechnet werden. Die Zeit bis sich die Zelle vollständig im Sensorbereich befindet bzw. diesen wieder verlassen hat, kann zur Berechnung der Zellgröße herangezogen werden. Die Transitzeit, die benötigt wird, lässt auf die Zellgeschwindigkeit schließen und die unterschiedliche Höhe der Plateaus beim Eindringen und Verlassen ist ein Maß für die Asymmetrie der Zelle. Zusammen mit dem integrierten Wert des OFy(t) Signals lässt sich somit die Form (Bullet-shaped, elliptisch, rund) der Zelle bestimmen.

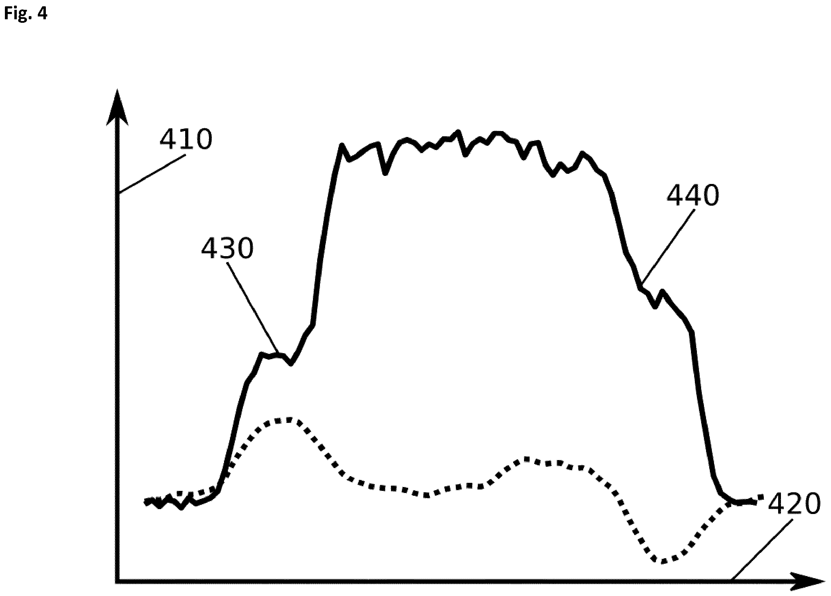

In Fig. 4 ist zum Vergleich das OF Signal einer realen runden Zelle, wie sie schematisch in Fig. 2 dargestellt ist, dargestellt. Die Achsen 410, 420 sind dieselben wie in Fig. 3, jedoch ist die Skalierung zur besseren Übersicht unterschiedlich gewählt. Es ist zu erkennen, dass die Plateaus bei der runden Zelle deutlich weniger ausgeprägt (430, 440) sind als bei der "bullet-shaped" Zelle in Fig. 3. Zusammen mit dem deutlich geringeren Wert des integrierten y-Signals lässt sich anhand der Schaubilder eine "bullet-shaped" Zelle von einer kugelförmigen unterscheiden. Die Messdaten zeigen deutlich, dass durch das erfindungsgemäße Verfahren eindeutige Daten erhalten werden, die (optional in Verbindung mit Referenzwerten und einer sogenannten "LookUp-Tabelle") zur Identifikation einer Zelle/Zellart beziehungsweise der Deformation der Zelle oder anderen Eigenschaften der Zelle führt. Die aus dem Verfahren gewonnen Daten wurden mit den Ergebnissen von konventionellen Messungen mit bildgebenden Verfahren verglichen. Sowohl die Zellgröße als auch die Flussgeschwindigkeit wurden vom oben vorgestellten Verfahren korrekt ermittelt. Bei den oben gezeigten Beispielen ist der Unterschied in der Zellform so gut zu erkennen, dass sie mit Leichtigkeit von einem auf Threshold-Werten beruhenden Programm unterschieden werden können, was den Suchbereich einer nachgeschalteten LookUp-Tabelle rasch einschränkt.

**Patentansprüche**

1.  Verfahren zur Untersuchung von Zellen, bei welchem

 a) Zellen mit Hilfe einer Einheit zur Vereinzelung von Zellen vereinzelt werden,
 b) die vereinzelten Zellen einen Messbereich einer Einheit zur ortsaufgelösten Strahlungsintensitätsmessung passieren, wobei für mindestens eine der vereinzelten Zellen beim Passieren des Messbereichs eine zeitliche Abfolge von räumlichen Intensitätsmustern einer von der Zelle ausgehenden und/oder beeinflussten elektromagnetischen Strahlung erstellt wird,

**dadurch gekennzeichnet, dass**

c) der optische Fluss von jeweils zwei der räumlichen Intensitätsmuster für zumindest einen Teil der zeitlichen Abfolge von Intensitätsmustern mit Hilfe einer Recheneinheit berechnet wird, und

d) eine Auswertung der berechneten optischen Flüsse erfolgt wobei bei der Auswertung der optischen Flüsse in Schritt d) zumindest eine Eigenschaft der Zelle bestimmt wird, welche ausgewählt ist aus der Gruppe bestehend aus der Form der Zelle, der Zellgröße, des Zellvolumens, der Zellart, der Morphologie, der Deformation der Zelle sowie Kombinationen hiervon.

2. Verfahren nach dem vorhergehenden Anspruch, **dadurch gekennzeichnet, dass**

- die Auswertung der berechneten optischen Flüsse in Schritt d) durch die Recheneinheit oder durch eine zusätzliche Einheit zur Auswertung der berechneten optischen Flüsse durchgeführt wird, oder
- die Auswertung der berechneten optischen Flüsse in Schritt d) teilweise von der Recheneinheit und teilweise von einer zusätzlichen Einheit zur Auswertung der berechneten optischen Flüsse durchgeführt wird.

3. Verfahren nach einem der vorhergehenden Ansprüche, **dadurch gekennzeichnet, dass** bei der Erstellung der zeitlichen Abfolge von Intensitätsmustern in Schritt b) die mindestens eine Zelle mit elektromagnetischer Strahlung bestrahlt wird, wobei die Bestrahlung vorzugsweise durch eine natürliche Strahlungsquelle und/oder eine künstliche Strahlungsquelle erfolgt, wobei die künstliche Strahlungsquelle insbesondere ausgewählt ist aus der Gruppe bestehend aus kohärenten Strahlungsquellen, partiell kohärenten Strahlungsquellen, inkohärenten Strahlungsquellen, punktförmigen Strahlungsquellen, flächigen Strahlungsquellen sowie Kombinationen hiervon.

4. Verfahren nach einem der vorhergehenden Ansprüche **dadurch gekennzeichnet, dass** beim Erstellen der zeitlichen Abfolge von räumlichen Intensitätsmustern in Schritt b) so viele Intensitätsmuster für jeweils eine Zelle erstellt werden, dass möglichst wenige Diskontinuitäten in den auszuwertenden optischen Flüssen auftreten.

5. Verfahren nach einem der vorhergehenden Ansprüche, **dadurch gekennzeichnet, dass** von mehreren, bevorzugt allen, der Zellen, welche den Messbereich der Einheit zur ortsaufgelösten Strahlungsintensitätsmessung passieren, mindestens eine Eigenschaft bestimmt wird und im Anschluss an Schritt d) die Zellen basierend auf Unterschieden in dieser mindestens einen Eigenschaft mit Hilfe eines Zellsortierers, bevorzugt eines steuerbaren Tores, in mindestens zwei Gruppen sortiert werden.

6. Vorrichtung zur Untersuchung von Zellen, enthaltend

- mindestens eine Einheit zur Vereinzelung von Zellen,
- mindestens eine Einheit zur ortsaufgelösten Strahlungsintensitätsmessung, welche so ausgebildet ist, dass sie eine zeitliche Abfolge von Intensitätsmustern einer von einer vereinzelten Zelle ausgehenden elektromagnetischen Strahlung erstellen kann, während die Zelle einen Messbereich der Einheit zur ortsaufgelösten Strahlungsintensitätsmessung passiert, und
- eine Recheneinheit zur Berechnung des optischen Flusses von jeweils zwei der erstellten Intensitätsmuster sowie zur Auswertung der berechneten optischen Flüsse, bei welcher zumindest eine Eigenschaft der Zelle bestimmt wird, welche ausgewählt ist aus der Gruppe bestehend aus der Form der Zelle, der Zellgröße, des Zellvolumens, der Zellart, der Morphologie, der Deformation der Zelle sowie Kombinationen hiervon.

7. Vorrichtung nach dem vorhergehenden Anspruch, **dadurch gekennzeichnet, dass** die Vorrichtung eine zusätzliche Einheit zur Auswertung der berechneten optischen Flüsse enthält.

8. Vorrichtung nach einem der Ansprüche 6 oder 7, **dadurch gekennzeichnet, dass** die Vorrichtung eine Strahlungsquelle enthält, welche bevorzugt ausgewählt ist aus der Gruppe bestehend aus kohärenten Strahlungsquellen, partiell kohärenten Strahlungsquellen, inkohärenten Strahlungsquellen, punktförmigen Strahlungsquellen, flächigen Strahlungsquellen sowie Kombinationen hiervon.

9. Vorrichtung nach einem der Ansprüche 6 bis 8, **dadurch gekennzeichnet, dass** die Einheit zur ortsaufgelösten Strahlungsintensitätsmessung eine geometrische Anordnung elektronischer Bauelemente enthält, welche bevorzugt eine Photodiode, einen CCD-Sensor und/oder eine Kamera umfasst.

**10.** Vorrichtung nach einem der Ansprüche 6 bis 9, **dadurch gekennzeichnet, dass** die Vorrichtung ein System zur Abbildung der Zellen auf die Einheit zur ortsaufgelösten Strahlungsintensitätsmessung enthält.

**11.** Vorrichtung nach einem der Ansprüche 6 bis 10, **dadurch gekennzeichnet, dass** die Einheit zur ortsaufgelösten Strahlungsintensitätsmessung und die Recheneinheit auf einem gemeinsamen Halbleiter-Chip angeordnet sind, wobei vorzugsweise auch eine Strahlungsquelle und/oder eine zusätzliche Einheit zur Auswertung der berechneten optischen Flüsse auf dem gemeinsamen Halbleiterchip angeordnet sind.

**12.** Vorrichtung nach einem der Ansprüche 6 bis 11, **dadurch gekennzeichnet, dass** die Einheit zur Vereinzelung von Zellen ein Mikrokanal, vorzugsweise ein Mikrofluidikkanal, ist.

**13.** Vorrichtung nach einem der Ansprüche 6 bis 12, **dadurch gekennzeichnet, dass** die Vorrichtung einen Zellsortierer, bevorzugt ein steuerbares Tor, enthält.

**14.** Verfahren nach einem der Ansprüche 1 bis 5, **dadurch gekennzeichnet, dass** es mit einer Vorrichtung nach einem der Ansprüche 6 bis 13 ausgeführt wird.


**Claims**

**1.** Method for analyzing cells in which

a) cells are separated with the aid of a unit for separating cells;
b) the separated cells pass through a measurement region of a unit for spatially resolved radiation intensity measurement, wherein a time sequence of spatial intensity patterns of an electromagnetic radiation emanating from and/or influenced by the cell is prepared for at least one of the separated cells on passing through the measurement region;
**characterized in that**
c) the optical flow of two respective spatial intensity patterns is calculated for at least a portion of the time sequence of intensity patterns with the aid of a processing unit; and
d) an evaluation of the calculated optical flows takes place

wherein, in the evaluation of the optical flows in step d), at least one property of the cell is determined that is selected from the group consisting of the shape of the cell, the cell size, the cell volume, the cell type, the morphology, the deformation of the cell, and combinations hereof.

**2.** Method in accordance with the preceding claim, **characterized in that**

- the evaluation of the calculated optical flows in step d) is carried out by the processing unit or by an additional unit for evaluating the calculated optical flows; or
- the evaluation of the calculated optical flows in step d) is carried out partially by the processing unit and partially by an additional unit for evaluating the calculated optical flows.

**3.** Method in accordance with one of the preceding claims, **characterized in that** the at least one cell is irradiated with electromagnetic radiation on the preparation of the time sequence of intensity patterns in step b), with the irradiation preferably taking place by a natural radiation source and/or by an artificial radiation source, with the artificial radiation source in particular being selected from the group consisting of coherent radiation sources, partially coherent radiation sources, incoherent radiation sources, dot-shaped radiation sources, areal radiation sources, and combinations hereof.

**4.** Method in accordance with one of the preceding claims, **characterized in that** so many intensity patterns for a respective one cell are prepared on the preparation of the time sequence of spatial intensity patterns in step b) that as few discontinuities as possible occur in the optical flows to be evaluated.

**5.** Method in accordance with one of the preceding claims, **characterized in that** at least one property is determined from a plurality of cells, preferably from all the cells, that pass through the measurement region of the unit for spatially resolved radiation intensity measurement and **in that** the cells are sorted with the aid of a cell sorter, preferably of a controllable gate, into at least two groups subsequently to step d) on the basis of differences in this at least one property.

6. Apparatus for analyzing cells including

- at least one unit for separating cells;
- at least one unit for spatially resolved radiation intensity measurement that is configured such that it can prepare a time sequence of intensity patterns of an electromagnetic radiation emanating from a separated cell while the cell passes through a measurement region of the unit for spatially resolved radiation intensity measurement; and
- a processing unit for calculating the optical flow of a respective two of the prepared intensity patterns and for evaluating the calculated optical flows, at which at least one property of the cell is determined that is selected from the group consisting of the shape of the cell, the cell size, the cell volume, the cell type, the morphology, the deformation of the cell, and combinations hereof.

7. Apparatus in accordance with the preceding claim, **characterized in that** the apparatus includes an additional unit for evaluating the calculated optical flows.

8. Apparatus in accordance with one of the claims 6 or 7, **characterized in that** the apparatus includes a radiation source that is preferably selected from the group consisting of coherent radiation sources, partially coherent radiation sources, incoherent radiation sources, dot-shaped radiation sources, areal radiation sources, and combinations hereof.

9. Apparatus in accordance with one of the claims 6 to 8, **characterized in that** the unit for spatially resolved radiation intensity measurement includes a geometrical arrangement of electronic components that preferably comprises a photodiode, a CCD sensor and/or a camera.

10. Apparatus in accordance with one of the claims 6 to 9, **characterized in that** the apparatus includes a system for imaging the cells on the unit for spatially resolved radiation intensity measurement.

11. Apparatus in accordance with one of the claims 6 to 10, **characterized in that** the unit for spatially resolved radiation intensity measurement and the processing unit are arranged on a common semiconductor chip, with a radiation source and/or an additional unit for evaluating the calculated optical flows also preferably being arranged on the common semiconductor chip.

12. Apparatus in accordance with one of the claims 6 to 11, **characterized in that** the unit for separating cells is a microchannel, preferably a microfluidic channel.

13. Apparatus in accordance with one of the claims 6 to 12, **characterized in that** the apparatus is a cell sorter, preferably a controllable gate.

14. Method in accordance with one of the claims 1 to 5, **characterized in that** it is carried out using an apparatus in accordance with one of the claims 6 to 13.

**Revendications**

1. Procédé d'analyse de cellules, selon lequel

a) les cellules sont séparées à l'aide d'une unité de séparation de cellules,
b) les cellules séparées passent par une zone de mesure d'une unité de mesure d'intensité de rayonnement à résolution locale, dans lequel une séquence temporelle de modèles d'intensité spatiaux d'un rayonnement électromagnétique partant de et/ou influencé par la cellule est établie pour au moins une des cellules séparées lors du passage par la zone de mesure, **caractérisé en ce que**
c) le flux optique de respectivement deux des modèles d'intensité spatiale est calculé pour au moins une partie de la séquence temporelle de modèles d'intensité à l'aide d'une unité de calcul, et
d) une évaluation des flux optiques calculés est effectuée, dans lequel au moins une propriété de la cellule est déterminée lors de l'évaluation des flux optiques à l'étape d), laquelle est choisie dans le groupe constitué par la forme de la cellule, la taille de cellule, le volume de cellule, le type de cellule, la morphologie, la déformation de la cellule ainsi que des combinaisons de ceux-ci.

2. Procédé selon la revendication précédente, **caractérisé en ce que**

- l'évaluation des flux optiques calculés à l'étape d) est réalisée par l'unité de calcul ou par une unité supplémentaire d'évaluation des flux optiques calculés, ou
- l'évaluation des flux optiques calculés à l'étape d) est réalisée en partie par l'unité de calcul et en partie par une unité supplémentaire d'évaluation des flux optiques calculés.

3. Procédé selon l'une quelconque des revendications précédentes, **caractérisé en ce que**, lors de l'établissement de la séquence temporelle de modèles d'intensité à l'étape b), la au moins une cellule est irradiée avec un rayonnement électromagnétique, dans lequel l'irradiation est effectuée de préférence par une source de rayonnement naturelle et/ou une source de rayonnement artificielle, dans lequel la source de rayonnement artificielle est choisie en particulier dans le groupe constitué par des sources de rayonnement cohérentes, des sources de rayonnement partiellement cohérentes, des sources de rayonnement incohérentes, des sources de rayonnement ponctuelles, des sources de rayonnement planes ainsi que des combinaisons de celles-ci.

4. Procédé selon l'une quelconque des revendications précédentes, **caractérisé en ce que**, lors de l'établissement de la séquence temporelle de modèles d'intensité spatiale à l'étape b), autant de modèles d'intensité pour chaque cellule que possible sont établis, de manière à ce qu'il y ait le moins possible de discontinuités dans les flux optiques à évaluer.

5. Procédé selon l'une quelconque des revendications précédentes, **caractérisé en ce qu'**au moins une propriété parmi plusieurs, de préférence toutes les cellules, lesquelles passent par la zone de mesure de l'unité de mesure d'intensité de rayonnement à résolution spatiale, est déterminée et, à la suite de l'étape d), les cellules sont triées en au moins deux groupes sur la base de différences dans cette au moins une propriété à l'aide d'un trieur de cellules, de préférence d'une porte commandable.

6. Dispositif pour l'analyse de cellules, contenant

- au moins une unité de séparation de cellules,
- au moins une unité de mesure d'intensité de rayonnement à résolution spatiale, laquelle est réalisée de telle sorte qu'elle peut établir une séquence temporelle de modèles d'intensité d'un rayonnement électromagnétique partant d'une cellule séparée, pendant que la cellule passe par une zone de mesure de l'unité de mesure d'intensité de rayonnement à résolution spatiale, et
- une unité de calcul pour calculer le flux optique de respectivement deux des modèles d'intensité établis ainsi que pour évaluer les flux optiques calculés, dans laquelle au moins une propriété de la cellule est déterminée, laquelle est choisie dans le groupe constitué par la forme de la cellule, la taille de cellule, le volume de cellule, le type de cellule, la morphologie, la déformation de la cellule ainsi que des combinaisons de ceux-ci.

7. Dispositif selon la revendication précédente, **caractérisé en ce que** le dispositif contient une unité supplémentaire pour évaluer les flux optiques calculés.

8. Dispositif selon l'une quelconque des revendications 6 ou 7, **caractérisé en ce que** le dispositif contient une source de rayonnement, laquelle est de préférence choisie dans le groupe constitué par des sources de rayonnement cohérentes, des sources de rayonnement partiellement cohérentes, des sources de rayonnement incohérentes, des sources de rayonnement ponctuelles, des sources de rayonnement planes ainsi que des combinaisons de celles-ci.

9. Dispositif selon l'une quelconque des revendications 6 à 8, **caractérisé en ce que** l'unité de mesure d'intensité de rayonnement à résolution spatiale contient un agencement géométrique de composants électroniques, lequel comprend de préférence une photodiode, un capteur CCD et/ou une caméra.

10. Dispositif selon l'une quelconque des revendications 6 à 9, **caractérisé en ce que** le dispositif contient un système de reproduction des cellules sur l'unité de mesure d'intensité de rayonnement à résolution spatiale.

11. Dispositif selon l'une quelconque des revendications 6 à 10, **caractérisé en ce que** l'unité de mesure d'intensité de rayonnement à résolution spatiale et l'unité de calcul sont disposées sur une puce semi-conductrice commune, dans lequel une source de rayonnement et/ou une unité supplémentaire pour l'évaluation des flux optiques calculés sont de préférence également disposées sur la puce semi-conductrice commune.

12. Dispositif selon l'une quelconque des revendications 6 à 11, **caractérisé en ce que** l'unité de séparation des cellules est un microcanal, de préférence un canal microfluidique.

13. Dispositif selon l'une quelconque des revendications 6 à 12, **caractérisé en ce que** le dispositif contient un trieur de cellules, de préférence une porte commandable.

14. Procédé selon l'une quelconque des revendications 1 à 5, **caractérisé en ce qu'**il est mis en œuvre avec un dispositif selon l'une quelconque des revendications 6 à 13.

**Fig. 1**

Fig. 2

Fig. 3

Fig. 4

**EP 3 574 303 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015024690 A1
- WO 2012045716 A1
- US 20130177935 A1

**In der Beschreibung aufgeführte Nicht-Patentliteratur**

- **B. LINCOLN et al.** *Cytometry Part A,* 2004, vol. 59A, 203-209
- **O. OTTO et al.** *Nature Methods,* 2015, vol. 12, 199-202
- **J. GUCK et al.** *Biophysical Journal,* 2005, vol. 88, 3689-3698
- **H. T. K. TSE et al.** *Sci. Transl. Med.,* 2013, vol. 5, 212-163
- **D. ISSADORE et al.** *Sci. Transl. Med.,* 2012, vol. 4 (141), 141-92
- **M. XAVIER et al.** *Integr. Biol.,* 2016, vol. 8, 616
- **A. MIETKE et al.** *Biophysical Journal,* 2015, vol. 109, 2023-2036
- **O. OTTO et al.** Real Time - Deformability Cytometry. *Nature Methods,* 2015, vol. 12, 199-202